# FASCICULE DE BREVET EUROPEEN

(11) **EP 2 621 745 B1**
(45) Date de publication et mention de la délivrance du brevet: **25.12.2019**
(21) Numéro de dépôt: 11779752.2
(22) Date de dépôt: 28.09.2011
(51) Int. Cl.: B60J 10/00, B60R 13/04

(54) **VITRAGE A JOINT PROFILE ENCAPSULE ET PIECE RAPPORTEE FIXEE AU JOINT, ELEMENT DE FIXATION DE LA PIECE RAPPORTEE POUR LE VITRAGE ET PROCEDE DE FABRICATION DU VITRAGE.**
GLASSCHEIBE MIT EINEM UMHÜLLTEN DICHTUNGSPROFIL UND EINEM AN DEM DICHTUNFSPROFIL BEFESTIGTEN EINSATZ ZUR BEFESTIGUNG DES EINSATZES FÜR DIE GLASSCHEIBE UND VERFAHREN ZUR HERSTELLUNG DER GLASSCHEIBE
GLASS PANEL HAVING AN ENCAPSULATED PROFILED JOINT AND INSERT ATTACHED TO THE JOINT, ELEMENT FOR ATTACHING THE INSERT FOR THE GLASS PANEL, AND METHOD FOR MANUFACTURING THE GLASS PANEL

(30) Priorité: 28.09.2010 FR 1057801
(43) Date de publication de la demande: 07.08.2013
(73) Titulaire: Saint-Gobain Glass France, 92400 Courbevoie (FR)
(72) Inventeur: GRANDGIRARD, Bastien, F-60490 Marqueglise (FR); LEFEVRE, Pascal, F-02300 Viry Noureuil (FR); FROISSARD, Loïc, F-60750 Choisy-au-Bac (FR); GONNET, Romain, F-60610 Lacroix Saint Ouen (FR)
(74) Mandataire: Saint-Gobain Recherche
(86) Numéro de dépôt international: PCT/FR2011/052263
(87) Numéro de publication internationale: WO 2012/042172

(56) Documents cités:
- EP-A1- 2 335 958
- DE-A1- 3 432 592
- DE-U1-202010 001 223
- FR-A1- 2 577 483
- US-A- 4 904 014
- US-A1- 2003 075 949
- US-B1- 6 546 683

## Description

La présente invention concerne un élément de fixation d'une pièce rapportée, telle qu'un enjoliveur, sur un vitrage, notamment un vitrage utilisé sur un véhicule. La présente invention concerne également les vitrages mettant en oeuvre un tel élément de fixation.

Dans tout le présent document, l'expression « pièce rapportée » désigne un accessoire du vitrage, en particulier un accessoire de forme allongée ; elle ne désigne pas un élément de carrosserie de véhicule.

On sait que pour améliorer sur le plan esthétique certains vitrages, notamment les vitrages utilisés dans le domaine automobile, on fait appel à des enjoliveurs qui sont habituellement constitués de profilés qui viennent se fixer par clipage sur des clips qui sont attachés à un cordon profilé, réalisés par exemple en un polymère souple, qui est surmoulé sur chaque vitrage, notamment en périphérie de ce dernier.

On connaît ainsi par la demande internationale N° WO 2005/033526 un système de clipage d'un profilé enjoliveur pour cordon profilé utilisant un clip souple présentant un premier bossage simple destiné à être introduit dans une première rainure simple du cordon profilé et un deuxième bossage plus complexe, en forme de crochet, destiné à être introduit dans une rainure également plus complexe du cordon profilé par déformation du clip souple. Le clip est ainsi crocheté sur le cordon profilé. Un effet de pinçage du cordon profilé est par ailleurs obtenu en réalisant une distance légèrement plus courte entre les deux bossages du clip qu'entre les deux rainures du cordon profilé. EP2335958 A1 divulgue un vitrage conformément au préambule de la revendication 1.

Pour la fixation du profilé enjoliveur, ce dernier est d'abord introduit dans un bossage du clip, puis le clip est à nouveau déformé pour permettre de passer le profilé enjoliveur au-dessus d'une saillie du cordon profilé.

Or, il se trouve que cette déformation est exactement contraire à la déformation qui permet d'accrocher le clip sur le cordon profilé.

Une fois le montage terminé le clip souple est ainsi en permanence soumis à des tensions opposées qui tentent à la fois de le maintenir crocheté sur le cordon profilé et de maintenir le profilé enjoliveur clipé sur le clip.

Un tel système lorsqu'il est utilisé sur un véhicule présente l'inconvénient que les vibrations auxquelles le cordon profilé est soumis lors du fonctionnement du véhicule, particulièrement sur route cahoteuse, provoquent des déformations de celui-ci risquant d'engendrer à terme un décrochement du clip entraînant la perte du profilé enjoliveur.

On connaît également par la demande internationale N° WO 2007/003823, un dispositif de fixation intermédiaire du type de celui précédemment décrit.

Selon ce document, la partie de coopération amont comporte au moins un élément mâle saillant ou un élément femelle creux, cet élément coopérant respectivement avec un élément femelle creux ou un élément mâle saillant correspondant ménagé dans le cordon profilé, ledit élément femelle creux présentant des dimensions intérieures au moins partiellement inférieures aux dimensions extérieures dudit élément mâle saillant.

Cette coopération est ainsi du type « tenon-mortaise » avec un effet de frottement entre une partie au moins des surfaces des éléments.

Un avantage important de ce dispositif par rapport au précédent réside dans la fiabilité du système de fixation : il permet un maintien fiable du profilé enjoliveur y compris dans des conditions extrêmes notamment de vibration.

Toutefois, ce système complexifie la conception du cordon profilé et oblige à concevoir un cordon profilé particulier qui présente des zones mâles ou femelles particulières.

En particulier, ce système oblige à positionner le clip avec une grande précision pour que la partie de coopération amont coopère correctement avec la partie correspondante ménagée dans le cordon profilé.

On connaît par ailleurs par le brevet américain N° US 3,869,760, un clip à pattes flexibles, ces pattes étant écartées pour passer un bossage dans lequel l'extrémité des pattes pénètre lorsqu'une force d'extraction est appliquée sur le clip.

On connaît en outre par la demande internationale de brevet N° WO 2008/084076 un système de clipage de profilé enjoliveur pour cordon profilé, ce cordon profilé comportant des zones aménagées pour la réception d'éléments de rétention du clip, ces zones aménagées se présentant sous la forme de trous permettant de retenir les éléments de rétention du clip qui se présentent sous la forme de flèches.

Pour réaliser la coopération entre le clip et le cordon profilé, il est alors nécessaire de positionner avec précision le clip vis-à-vis du cordon profilé pour que les éléments de rétention du clip pénètrent correctement dans les moyens de réception du cordon profilé.

Tous ces dispositifs de fixation d'un enjoliveur sur un vitrage présentent l'inconvénient de faire appel à au moins un élément intermédiaire qui est séparé matériellement du joint profilé ; il est donc nécessairement de prévoir un temps de montage pour le montage de l'élément intermédiaire sur le cordon profilé. En outre, ce montage est amovible, de sorte qu'il est difficile de garantir que la pérennité de la fixation de l'élément intermédiaire au cordon profilé sur plusieurs dizaines d'années.

L'art antérieur connaît par ailleurs, notamment de la demande de brevet français N° FR 2 577 483 et de la demande de brevet allemand N° DE 34 32 592, un élément de fixation présentant des dents situées en vis-à-vis l'une de l'autre, comme visible en particulier sur les figures en coupe, pour la fixation d'un élément rapporté. Ces systèmes empêchent effectivement l'arrachement de l'élément rapporté mais ne donnent pas entièrement satisfaction car ils ne bloquent pas suffisamment fermement l'élément rapporté dans les trois dimensions de l'espace.

En particulier, en étudiant le document FR 2 577 483, chacun peut constater que la rotation en suivant la courbure de l'élément rapporté n'est pas suffisamment empêchée ; dans le document DE 34 32 592, cette rotation n'est empêchée que par un profil très compliqué du cordon profilé.

La présente invention a pour but de remédier aux inconvénients de la technique antérieure en proposant un élément de fixation permettant de fixer, avec précision et efficacité et d'une manière amovible, sur un cordon profilé d'un vitrage au moins un élément rapporté, notamment un enjoliveur, en utilisant au moins un élément intermédiaire fixé de manière non amovible (c'est-à-dire définitive), au cordon profilé, sans qu'il soit nécessaire de concevoir une partie de cordon profilé compliquée.

La présente invention repose ainsi sur une solution où pour une pièce rapporté, l'élément intermédiaire (et de préférence les éléments intermédiaires) est (ou sont) incorporé(s) partiellement au cordon profilé lors de la formation de ce dernier par moulage sur un élément vitré (technologie dite « d'encapsulation ») et où l'élément rapporté est ensuite clippé efficacement sur l'élément intermédiaire (les éléments intermédiaires).

Ainsi, pour un vitrage et d'un vitrage à un autre d'une même série, d'une part la fixation de chaque élément intermédiaire par l'encapsulat (la matière appliquée par la technique d'encapsulation) est sûre et certaine, mais en outre, le positionnement de l'élément intermédiaire est précis, facile et rapide puisqu'il est opéré à l'intérieur du moule d'encapsulation, avant la formation du cordon profilé.

La présente invention a ainsi pour objet un vitrage selon la revendication 1. Les revendications dépendantes présentent des variantes de réalisation.

Le vitrage selon l'invention comprend un élément vitré, au moins une portion de joint profilé, au moins une pièce rapportée telle qu'un enjoliveur, et au moins un élément de fixation pour la fixation de ladite pièce rapportée à ladite portion de joint profilé. Selon l'invention, ledit élément de fixation comporte une semelle présentant un axe longitudinal, ladite semelle étant surmoulée au moins partiellement dans ladite portion de joint profilé et supporte au moins deux ailes qui sont situées en dehors de ladite portion de joint profilé, pour la fixation de ladite pièce rapportée audit élément de fixation. Ces deux ailes au moins qui sont ainsi attachées à ladite semelle s'étendent longitudinalement et exercent ainsi un maintien de la pièce rapportée par pinçage ou clipage.

Ainsi suivant l'invention, l'élément intermédiaire est intégré à l'encapsulat et sa fixation à la portion de joint profilé est alors précise, sûre et certaine.

En outre, la fixation amovible de la pièce rapportée est précise et fiable.

Par ailleurs, ne pas utiliser d'élément intermédiaire rapporté postérieurement à l'encapsulation permet d'optimiser le temps de prémontage, dans la mesure où seul l'enjoliveur doit être rapporté sur le vitrage encapsulé alors que, suivant certains documents de l'état antérieur de la technique, il était nécessaire de mettre en place également au moins un (et en général plusieurs) élément(s) intermédiaire(s) vis-à-vis du cordon profilé avant de clipper l'enjoliveur sur cet (ou ces) élément(s) intermédiaire(s).

Pour faciliter le moulage, la semelle de la pièce intermédiaire selon l'invention est de préférence sensiblement plate et présente un plan moyen.

La semelle de la pièce intermédiaire selon l'invention est surmoulée au moins partiellement, c'est-à-dire au moins sur une partie de sa périphérie et contre une partie, voire toute, sa face tournée à l'opposée de la pièce rapportée ; par contre, la semelle n'est pas surmoulée sur la totalité de sa face tournée vers la pièce rapportée.

La semelle de la pièce intermédiaire selon l'invention supporte de préférence directement, sans interposition d'une embase, les deux ailes au moins.

Par ailleurs, afin de faciliter la mise en place de l'enjoliveur sur le clip au moins deux ailes se terminent chacune par une extrémité distale (située à l'opposé de l'extrémité de raccordement à la semelle) qui est de préférence en forme en coupe, perpendiculairement à la direction longitudinale de la semelle, de crochet, deux crochets au moins étant orientés dans deux directions opposées. Ces crochets présentent une forme allongée selon la direction longitudinale.

La présente invention exclut que deux ailes soient situées symétriquement par rapport à un plan de symétrie perpendiculaire à ladite semelle (perpendiculaire au plan moyen de ladite semelle), c'est-à-dire que deux ailes soient en vis-à-vis l'une de l'autre suivant la longueur de l'élément de fixation ; le fait que les ailes soient décalées longitudinalement au sens de l'invention impose que deux ailes ne peuvent être en face l'une de l'autre suivant la longueur de l'élément de fixation.

Trois ailes sont situées symétriquement par rapport à un plan de symétrie perpendiculaire à ladite semelle (perpendiculaire au plan moyen de ladite semelle) ; dans une variante préférée, ce plan de symétrie passe par un axe transversal de l'élément de fixation en étant doublement perpendiculaire à un axe longitudinal et de préférence encore passe par l'axe transversal central de l'élément de fixation tout en étant doublement perpendiculaire à l'axe longitudinal central. Cette considération et ces préférences peuvent s'appliquer à toute solution de l'invention pour laquelle l'élément de fixation comporte un nombre impair d'ailes.

Avec les ailes en nombre impair, la symétrie qui vient d'être présentée permet de réaliser une répartition des efforts en rotation subis par les ailes lors du clippage, de telle sorte que ces efforts se compensent ; la rotation qui est considérée ici est une rotation autour d'un axe perpendiculaire au plan moyen de la semelle.

La semelle supporte trois ailes et l'aile centrale présente une longueur égale à la somme de la longueur des deux autres ailes, ces deux autres ailes présentant, en outre de préférence, la même longueur.

Il est ainsi préférable que pour tout élément de fixation, la longueur totale des ailes tournée dans une direction soit égale à la longueur totale des ailes tournée dans la direction opposée.

Dans une autre variante encore, la semelle est pleine dans sa partie de liaison avec au moins une aile, voire avec toutes les ailes ; elle ne comporte pas de réserve traversant la semelle dans cette partie de liaison avec une aile.

Dans une variante particulière, au moins une aile, et de préférence chaque aile, peut être réalisée à partir d'une portion de ladite semelle qui est découpée et pliée. En conséquence, la semelle présente au moins un évidemment correspondant respectivement à la portion de semelle qui a été découpée et pliée pour former une aile.

Dans une variante toute particulière, la semelle est de forme rectangulaire et comporte, de préférence, à chaque extrémité longitudinale au moins une encoche ou un trou pour le positionnement et/ou la fixation dudit élément de fixation dans le moule d'encapsulation. Toutefois, la semelle peut aussi être de forme circulaire ou ovale.

Selon l'invention, la semelle est, de préférence, surmoulée suivant au moins deux bandes chacune d'une largeur spécifique et qui s'étendent chacune suivant la longueur de la semelle ; ainsi en particulier les encoches ou trous aux extrémités longitudinales ne sont encapsulées cas elles (ou ils) ne sont pas compris dans lesdites bandes. L'avantage de cette solution est que la semelle est maintenue correctement par la matière du joint selon sa longueur, en particulier lors du clippage, et ce, malgré les efforts de torsion subis par les ailes lors du clippage.

La partie de cordon profilé opérant la retenue de la pièce intermédiaire en évitant ainsi son arrachement est ainsi avantageusement constituée d'au moins deux bandes qui s'étendent sur la longueur de la semelle, c'est-à-dire suivant la longueur de la pièce rapportée.

Selon une caractéristique particulière, au moins une aile, et de préférence chaque aile, se trouve complètement à l'intérieur d'un espace délimité par la projection perpendiculaire du pourtour de la semelle afin de faciliter le démoulage de la portion de cordon profilé qui intègre en partie la semelle.

La pièce rapportée peut être appliquée au moins le long d'un bord longitudinal du vitrage, et peut être appliquée de préférence le long de deux bords au moins du vitrage, contre ladite portion de cordon profilé. La pièce rapportée est alors maintenue par plusieurs éléments de fixation selon l'invention ; de préférence au moins deux éléments de fixation pour un bord et alors au moins un élément de fixation pour l'autre bord au moins.

Selon une particularité de l'invention, la pièce intermédiaire est, de préférence, situé en dehors de l'espace délimité par la projection perpendiculaire au pourtour de l'élément vitré, c'est-à-dire que la pièce intermédiaire se trouve complètement à l'extérieur d'un espace délimité par la projection perpendiculaire du pourtour de l'élément vitré ; la pièce intermédiaire ne prend donc pas appui sur l'élément vitré.

La présente invention a également pour objet un élément de fixation pour un vitrage suivant l'invention, ledit élément de fixation comportant une semelle présentant un axe longitudinal, ladite semelle supportant au moins trois ailes décalées longitudinalement, pour la fixation de ladite pièce rapportée audit élément de fixation.

La présente invention a également pour objet un procédé de fabrication d'un vitrage suivant l'invention, ledit vitrage comprenant un élément vitré, au moins une portion de joint profilé, au moins une pièce rapportée telle qu'un enjoliveur, et au moins un élément de fixation pour la fixation de ladite pièce rapportée à ladite portion de joint profilé. Ledit élément de fixation comporte une semelle présentant un axe longitudinal, ladite semelle étant surmoulée au moins partiellement dans ladite portion de joint profilé et supporte au moins trois ailes décalées longitudinalement et qui sont situées en dehors de ladite portion de joint profilé, pour la fixation de ladite pièce rapportée audit élément de fixation.

On décrira ci-après, à titre d'exemples non limitatifs, plusieurs formes d'exécution de la présente invention, en référence aux dessins annexés sur lequel :
- la figure 1 illustre une vue en perspective d'un vitrage de véhicule présentant une pièce rapportée constituée d'un profilé enjoliveur et qui est fixée à un cordon profilé ;
- la figure 2 est une vue en perspective d'un premier mode de réalisation d'un élément de fixation qui n'est pas suivant l'invention à deux ailes décalées longitudinalement et à semelle ouverte ;
- la figure 3 est une vue de profil de l'élément de fixation représenté sur la figure 2 ;
- la figure 4 est une vue en coupe transversale selon BB' de la figure 1 ;
- la figure 5 est une vue équivalente de la figure 4 pendant le clipage de la pièce rapportée ;
- la figure 6 est une vue en perspective d'une variante de réalisation d'un élément de fixation selon l'invention à trois ailes qui sont toutes décalées longitudinalement et à semelle ouverte ;
- la figure 7 est une vue équivalente à la figure 4 d'une autre variante de réalisation d'un élément de fixation selon l'invention à semelle constituée d'une feuille double ;
- la figure 8 est une vue en perspective d'une autre variante de réalisation de l'élément de fixation qui n'est pas selon l'invention à deux ailes décalées longitudinalement et à semelle pleine ;
- la figure 9 est une vue en coupe transversale selon CC' de la figure 1.
- la figure 10 est une vue en perspective d'un contre-exemple de réalisation d'un élément de fixation à deux ailes face à face et à semelle ouverte ; et
- la figure 11 est une vue en perspective d'un autre contre-exemple de réalisation d'un élément de fixation à deux ailes face à face et à semelle pleine.

Dans ces figures, les proportions entre les différents éléments sont respectées sur chaque figure mais les éléments en arrière plan ne sont en général pas représentés, afin de faciliter leur lecture.

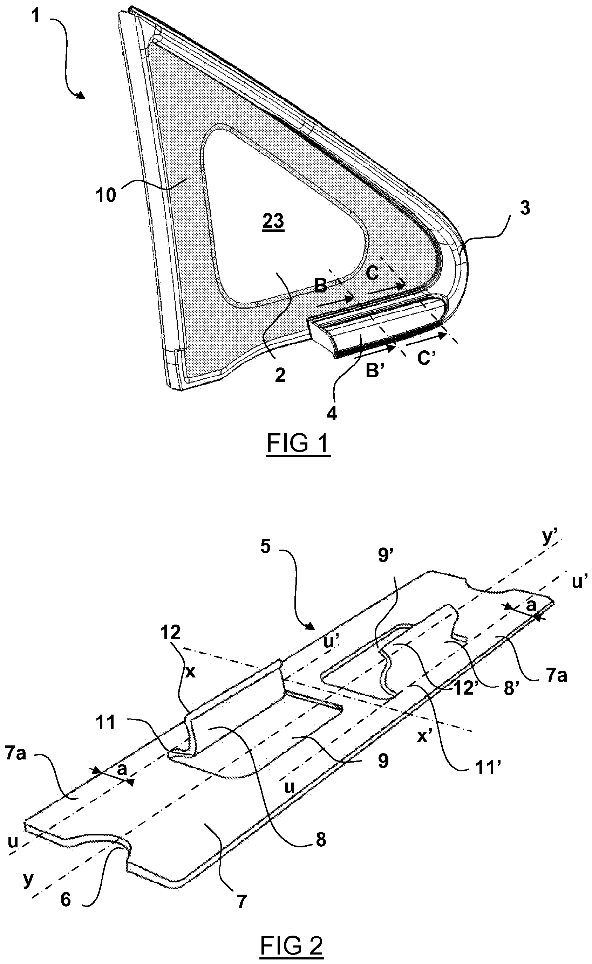

La présente invention se rapporte à un vitrage 1, et notamment un vitrage de véhicule tel que celui visible sur la figure 1, comprenant un élément vitré 2, au moins une portion de joint profilé 3, au moins une pièce rapportée 4 telle qu'un enjoliveur, et au moins un élément de fixation 5 pour la fixation de ladite pièce rapportée 4 à ladite portion de joint profilé 3. L'élément de fixation 5 n'est pas visible en figure 1 car il est interposé entre la portion de joint profilé 3 et la pièce rapportée 4.

Le vitrage 1 selon l'invention qui est illustré en figure 1 est un vitrage latéral arrière fixe d'une automobile (custode arrière). Il comporte un élément vitré 2 qui est muni d'une portion d'un cordon profilé 3 en un matériau polymère souple qui fait tout le tour de l'élément vitré 2.

Le vitrage 1, qui comporte éventuellement un (ou des) accessoire(s) et notamment un (ou des) accessoire(s) de fixation du vitrage, est destiné à fermer une baie réalisant une séparation entre un espace intérieur du véhicule et un espace extérieur au véhicule. L'élément vitré 2 présente ainsi une face extérieure 21, destinée à être tournée vers l'espace extérieur, une face intérieure 23 destinée à être tournée vers l'espace intérieur, ainsi qu'un chant 22 périphérique.

L'élément vitré peut être monolithique, c'est-à-dire constitué d'une feuille de matière unique, ou être composite, c'est-à-dire constitué de plusieurs feuilles de matière entre lesquelles est insérée au moins une couche de matière adhérente dans le cas des vitrages feuilletés. La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie une bande d'ornementation 10. Cette bande d'ornementation résulte en général d'un dépôt d'émail, réalisé sur la face intérieure de l'élément vitré lorsqu'il est monolithique ou sur une face intercalaire du vitrage pour les vitrages composites, mais elle peut également résulter d'une coloration partielle et/ou périphérique d'une feuille de matière utilisée, notamment d'une feuille en matière organique.

Lorsque l'élément vitré est en matière organique, il a été fabriqué préalablement à la mise en œuvre de l'invention par moulage de la matière constitutive de l'élément vitré dans un dispositif de moulage comportant un moule comportant au moins une partie fixe de moule et une partie mobile de moule qui est mobile par rapport à la partie fixe de moule, lesdites parties de moule coopérant à l'état fermé du moule, pendant l'étape de moulage, pour former une cavité de moulage présentant en coupe la forme en coupe de l'élément vitré. Souvent, l'élément vitré en matière organique n'est pas plat mais bombé.

Lorsque l'élément vitré est en matière minérale, il a été fabriqué préalablement à la mise en œuvre de l'invention par fusion de matière minérale en une feuille plate, puis par découpe de cette feuille et éventuellement bombage et/ou trempe de cette feuille.

Pour information, la fabrication d'un élément vitré en matière organique en grande série est plus onéreuse que la fabrication d'un élément vitré en matière minérale et le premier mode de fabrication est en général choisi lorsque la forme de l'élément vitré est tellement complexe qu'elle ne peut pas être réalisée par bombage d'un élément vitré en matière minérale.

Lorsque l'élément vitré est un élément vitré composite, il a été fabriqué selon la technique bien connue de fabrication des vitrages multiples ou des vitrages feuilletés, éventuellement bombés.

Sur la figure 1, l'élément vitré 2 est un vitrage monolithique.

Le vitrage illustré en figure 1 est un vitrage fixe, mais la présente invention peut aussi s'appliquer à un vitrage mobile.

La portion de joint profilé 3 présente ainsi une partie extérieure 31 qui est destinée à être orientée vers l'extérieur du véhicule, ainsi qu'une partie latérale 32 qui est située en vis-à-vis du chant 22 de l'élément vitré et/ou une partie intérieure 33 qui est destinée à être orientée vers l'intérieur du véhicule.

Le matériau polymère constitutif du cordon profilé 3 peut être un thermoplastique (PVC, TPE, ...), un polyuréthanne ou encore un caoutchouc synthétique du type EPDM ou toute autre matière adéquate.

Le cordon profilé 3 est fabriqué par mise en œuvre d'un procédé de fabrication appelé « encapsulation » car il comporte une étape de moulage du cordon profilé 3 dans un dispositif de moulage, entre deux éléments de moulage, un élément de moulage accueillant la face intérieure du vitrage et un élément de moulage accueillant la face extérieure du vitrage, ces deux éléments de moulage étant refermés l'un sur l'autre pendant l'étape de moulage tout en réalisant entre eux une cavité de moulage qui est remplie de la matière constitutive du cordon profilé pendant l'étape de moulage de ce cordon.

Sur la figure 1, le cordon profilé 3 est disposé sur toute la périphérie du vitrage 1 mais ce cordon profilé pourrait tout à fait n'être positionné que sur une partie de la périphérie du vitrage ou sur une partie quelconque du vitrage. Ce cordon présente en partie arrière basse et en partie arrière une épaisseur plus importante que sur le reste de la périphérie du vitrage.

Sur cette figure 1, la pièce rapportée 4 recouvre ainsi une portion de la surface de la partie extérieure 31 du joint profilé et plus précisément une portion de la surface de la partie arrière du cordon profilé.

En considérant que le vitrage arrière fixe est positionné d'une manière sensiblement verticale, la pièce rapportée est ainsi allongée suivant la longueur du véhicule et s'étend à la fois sur une face vers le haut et sur une autre face sur le côté droit ou gauche du véhicule. La pièce apportée présente ainsi une forme allongée et s'étend sur deux faces transversales perpendiculaires entre elles et raccordées par un angle arrondi.

C'est pour améliorer l'aspect esthétique du vitrage, qu'une partie du cordon profilé 3 visible de l'extérieur du véhicule est masquée par la pièce rapportée 4 constituée ici d'un profilé enjoliveur et qui est ici disposé seulement sur la partie arrière basse épaisse du cordon profilé, mais qui pourrait également être disposé sur toute la périphérie du cordon profilé et/ou sur une partie quelconque du cordon profilé.

La pièce rapportée est préfabriquée : elle a été fabriquée, et éventuellement mise en forme, préalablement à sa fixation au vitrage. Elle peut être en aluminium, alliage d'aluminium, acier et notamment acier inoxydable, matière plastique et notamment matière plastique renforcée de charge comme par exemple de charges minérales à base de silice ou de fibres de verre. Elle peut aussi être réalisée en plusieurs parties, avec éventuellement des matériaux différents pour au moins deux parties.

Suivant l'invention l'élément de fixation 5 est constitué d'un clip qui est destiné à assurer le montage de la pièce rapportée 4 sur le cordon profilé 3 par clipage.

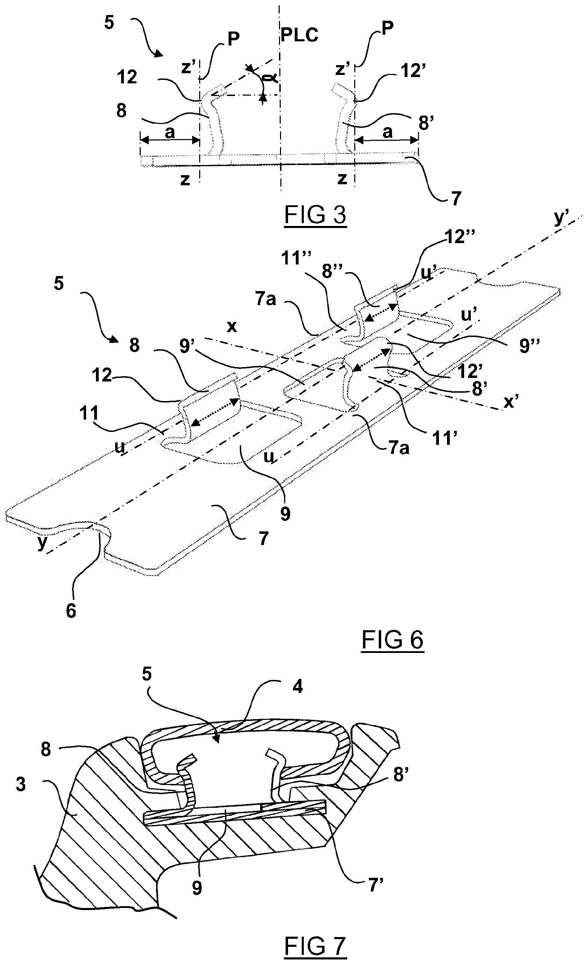

Un exemple de réalisation d'un élément de fixation 5 hors invention, pour le montage de la pièce rapportée 4 sur une portion du cordon profilé 3 est illustré en figures 2 et 3.

Dans ce premier mode de réalisation hors invention qui est représenté sur ces figures, l'élément de fixation est constitué d'un clip réalisé à partir d'une plaque métallique formant une semelle 7, plate, rectangulaire. L'élément de fixation 5 présente un axe longitudinal central yy' et un axe transversal central xx', perpendiculaire à l'axe longitudinal central yy', ainsi qu'un plan longitudinal central PLC qui est le plan passant par l'axe longitudinal central yy' et perpendiculaire au plan de la semelle 7.

Sur la figure 2, l'axe de symétrie qui permet d'observer la symétrie axiale de la configuration des ailes est l'axe qui est perpendiculaire à la fois à l'axe longitudinal central yy' et à l'axe transversal central xx' .

Deux découpes 9, 9' partielles ont été réalisées dans la semelle 7 afin de former par pliage de ces découpes deux ailes 8, 8' s'étendant sensiblement perpendiculaires à la semelle 7.

Pour former chacune des ailes 8, 8' on réalise une découpe dans la surface intérieure de la semelle 7 (c'est-à-dire une découpe qui ne vient pas à la périphérie de la semelle) sur trois côtés perpendiculaires deux à deux et l'on conserve le côté complémentaire des trois côtés de la découpes pour former une extrémité proximale 11, 11' de chaque aile 8, 8' qui s'étend suivant un axe uu' parallèle à l'axe longitudinal central yy' et qui forme une « charnière » autour de laquelle on plie en arrondi l'aile découpée de façon à l'amener à occuper une position sensiblement perpendiculaire à la semelle 7. On effectue ensuite un second pliage en arrondi à l'extrémité distale 12, 12' de l'aile 8, 8' (c'est-à-dire à l'extrémité opposée à la liaison entre l'aile et la semelle) de façon à incliner cette extrémité vers le plan longitudinal central PLC d'un angle α d'environ 30° par rapport au plan de la semelle et à former sur l'aile un bossage longitudinal, comme visible en figure 3.

Ainsi, grâce à ce deuxième pliage, les deux ailes se terminent par une extrémité distale en forme en coupe transversale de crochets orientés dans deux directions opposées, c'est-à-dire orientés l'un vers l'autre.

Ainsi que représenté sur la figure 2, les extrémités proximales 11, 11' des deux ailes 8, 8' se situent de part et d'autre de l'axe longitudinal central yy' et sont décalées l'une par rapport à l'autre dans le sens longitudinal : elles sont décalées de la même distance de chaque côté de l'axe transversal central xx'. Plus précisément, dans cette variante, les deux ailes 8, 8' sont situées symétriquement par rapport à un axe de symétrie perpendiculaire à ladite semelle, cet axe de symétrie étant perpendiculaire à la fois à l'axe yy' longitudinal central et à l'axe xx' transversal central.

Les découpes 9, 9' réalisées dans la semelle 7 sont disposées de façon que chaque axe de pliage uu' soit écarté transversalement d'une distance de réserve a des bords longitudinaux de la semelle 7 de façon à former une surface de réserve 7a destinée à être recouverte au moins en partie et de préférence totalement par le matériau polymère du joint profilé 3 lors de la phase d'encapsulation, ainsi que représenté sur la figure 3, de façon à assurer le maintien de la semelle 7 du clip par le joint profilé 3.

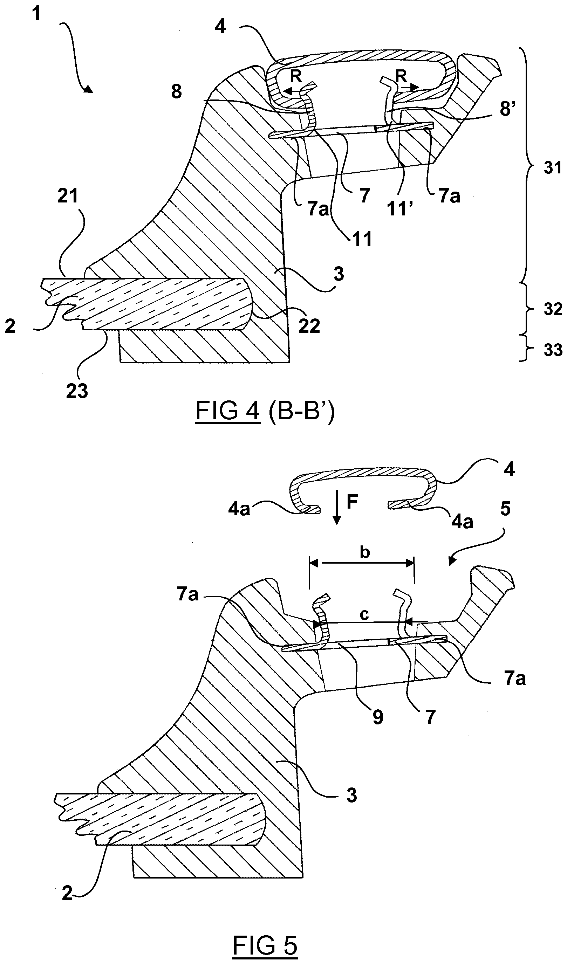

Comme visible sur la figure 4, la semelle 7 de l'élément de fixation 5 est ainsi surmoulée au moins partiellement (c'est-à-dire au moins sur une partie de sa périphérie) dans ladite partie extérieure 31 de ladite portion de joint profilé 3, la semelle 7 supportant au moins deux ailes 8, 8' qui sont situées en dehors de la portion de joint profilé 3, pour la fixation de la pièce rapportée 4 audit élément de fixation 5 ; la semelle 7 de l'élément de fixation 5 pourrait être surmoulée au moins partiellement dans la partie latérale 32 ; voire la semelle 7 pourrait être surmoulée dans la partie intérieure 33 de ladite portion de joint profilé 3, notamment si le joint profilé est peu épais à cet endroit.

Comme visible aussi sur cette figure 4, les ailes 8, 8' s'étendant sensiblement perpendiculaires à la semelle 7 à l'opposé de la face extérieure 21 de l'élément vitré 2, c'est-à-dire en direction de l'extérieur du véhicule lorsque l'on considère le vitrage qui est monté sur un véhicule.

Le clip comprend ainsi une zone de liaison avec le matériau d'encapsulation surmoulé sur l'élément vitré 2 et qui est constitué par la périphérie la semelle 7, plus précisément les surfaces de réserve 7a de largeur a et les extrémités longitudinales de la semelle 7.

La semelle 7 comporte ici à chaque extrémité longitudinale au moins une encoche 6 pour le positionnement et/ou la fixation de l'élément de fixation 5 dans le moule d'encapsulation.

Préférentiellement et ainsi que représenté sur la figure 3, notamment afin de faciliter le démoulage après l'opération d'encapsulation, la partie des ailes 8, 8' qui se situe le plus à l'extérieur, à savoir l'extrémité distale 12, 12' dans le présent mode de réalisation illustré, se situe à l'intérieur du clip par rapport à un plan P longitudinal, visible sur la figure 3, et perpendiculaire à la semelle 7 et distant des bords longitudinaux de la valeur de réserve a.

Autrement dit, chaque aile 8, 8', se trouve complètement à l'intérieur d'un espace délimité par la projection perpendiculaire du pourtour de la semelle, afin de permettre de démouler facilement le cordon profilé 3 et l'élément de fixation 5.

Lors de l'opération d'encapsulation on vient former le cordon profilé 3 sur l'élément vitré 2 et ce cordon profilé enrobe la surface de réserve 7a de largeur a de la semelle 7, comme représenté sur la figure 4, ainsi que les extrémités longitudinales de cette dernière.

L'enjoliveur est ici constitué d'un élément profilé à section en forme de U renversé dont les branches extrêmes 4a se rapprochent du centre de façon que leurs extrémités soient écartées d'une distance b légèrement inférieure à l'écartement transversal c séparant les deux bossages des deux ailes 8, 8' du clip.

Pour mettre en place l'enjoliveur on le présente, comme visible en figure 5 au-dessus du clip et on l'applique sur ce dernier avec une force F suffisante pour que, au cours de cette action, les extrémités des ailes soient ramenées l'une vers l'autre et que les branches 4a de l'enjoliveur, une fois les bossages des extrémités distales 12, 12' passés, se trouvent soumises à une force de maintien élastique de composantes transversales R (visible en figure 4) dépendant de l'importance de la déformation subie par les ailes 8, 8' au cours de la mise en place, de la section des ailes 8, 8' et du module d'élasticité du matériau qui les constitue.

De façon à améliorer le maintien de l'enjoliveur lorsqu'il est en place sur le clip, ainsi que représenté sur la figure 4, on pourra faire en sorte de donner au cordon profilé 3 une forme appropriée au maintien de l'enjoliveur. On pourra par exemple, ainsi que dans le présent mode de mise en oeuvre, donner au cordon profilé 3 des dimensions telles que, lorsque l'enjoliveur est en place sur l'élément de fixation il se trouve appliqué par ce dernier contre ledit cordon profilé.

Le clip pourra bien entendu comporter plus de deux ailes ainsi que représenté sur la figure 6.

Préférentiellement on alterne alors les ailes 8, 8', 8'' de façon que deux ailes adjacentes aient leurs extrémités proximales 11, 11', 11'' respectives de part et d'autre de l'axe longitudinal central yy' du clip.

Les découpes 9, 9', 9" réalisées dans la semelle 7 sont disposées de façon que chaque axe de pliage uu' soit écarté transversalement d'une distance de réserve a des bords longitudinaux de la semelle 7 de façon à former une surface de réserve 7a destinée à être recouverte au moins en partie et de préférence totalement par le matériau polymère du joint profilé 3 lors de la phase d'encapsulation, ainsi que représenté sur la figure 3, de façon à assurer le maintien de la semelle 7 du clip par le joint profilé 3 ; les axes de pliage uu' sont de préférences identiques pour deux ailes situées du même côté de l'axe longitudinal central yy'.

Sur cette figure 6, le plan de symétrie qui permet d'observer la symétrie de plan de la configuration des ailes est le plan qui passe par l'axe transversal central xx' et qui est perpendiculaire deux fois à l'axe longitudinal central yy'.

Dans une variante de cette figure 6 non illustrée, l'aile centrale 8' présente une longueur (selon la direction longitudinale, illustrée par une flèche pointillée à double sens), par exemple de 8 mm, qui est égale à la somme de la longueur (illustrée chacune aussi par une flèche pointillée à double sens) des deux autres ailes 8, 8" et ces deux autres présentant dans cet exemple une même longueur de 4 mm.

Dans toutes les variantes précédentes, du fait de la présence des réserves 9, 9', 9'' dans la semelle 7, il est nécessaire de prévoir que la semelle 7 soit disposée dans le moule d'encapsulation sur un support destiné à empêcher l'encapsulat de pénétrer par les réserves 9, 9', 9".

Dans une variante hors invention qui est représentée sur la figure 7, les deux ailes 8, 8' sont réalisées comme pour les variantes précédente par découpe de la semelle 7', mais ici la semelle 7' comporte au moins deux feuilles de matière (comme par exemple un alliage métallique) qui sont superposées, de telle sorte que seule la feuille de la semelle la plus proche de la pièce rapporté 4 comporte les réserves 9 ; l'autre (ou les autres) feuille (s) de la semelle ne comporte(nt) pas de réserve. Ainsi, il n'est pas nécessaire de prévoir de moyens particuliers pour empêcher l'encapsulat de pénétrer par une réserve 9, 9', 9" dans chaque zone de liaison semelle/aile car ces réserves ne débouchent que sur une face principale de la semelle : sur la face la plus proche de la pièce rapportée.

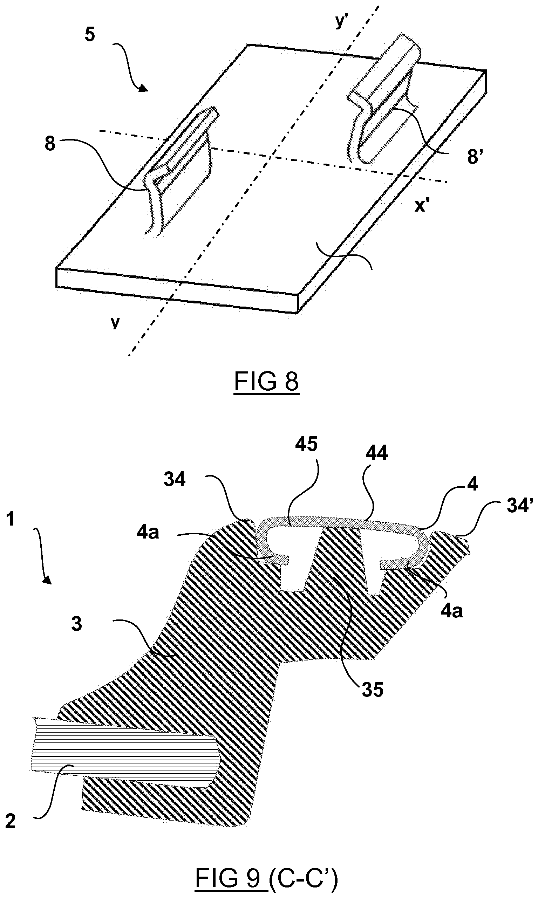

La variante de la figure 8 correspond à la variante de la figure 2 mais avec une différence : les ailes ne sont plus fabriquées par découpe de la matière de la semelle puis double pliage, mais la totalité du clip est fabriqué par moulage. Ainsi, pour cette variante, on retrouve l'avantage de la variante de la figure 7 : la semelle 7" du clip est dépourvue de réserve traversant la semelle dans chaque zone de liaison semelle/aile.

Il est à noter que la semelle 7, 7', 7" peut comporter un ou plusieurs trous traversant, en particulier dans une (ou les) surface(s) 7a afin d'augmenter le maintien de la semelle par le cordon profilé 3 dans au moins une zone de la semelle qui est en dehors d'une zone de liaison semelle/aile.

De façon à améliorer encore le maintien de l'enjoliveur lorsqu'il est en place sur le clip, il est possible de configurer le cordon profilé 3 tel que, en dehors d'une zone ou l'enjoliveur est retenu par le clip, le cordon profilé exerce un maintien de l'enjoliveur, ainsi que représenté sur la figure 9.

Sur cette figure, chacun peut constater que le cordon profilé 3 est creusé tout le long de la pièce rapportée 4 afin que la surface 44 la plus à l'extérieure de la pièce rapportée soit sensiblement dans la continuité (en anglais : « flush ») de la surface la plus à l'extérieur 34, 34' du cordon profilé.

De plus, la largeur du creux est sensiblement identique à la largeur de la pièce rapportée afin que les parois du creux maintiennent la pièce rapportée.

En outre, il est possible de prévoir un bossage central 35, au centre du creux du cordon profilé accueillant la pièce rapporté, ce bossage réalisant un appui pour la face intérieure 45 de la pièce rapportée.

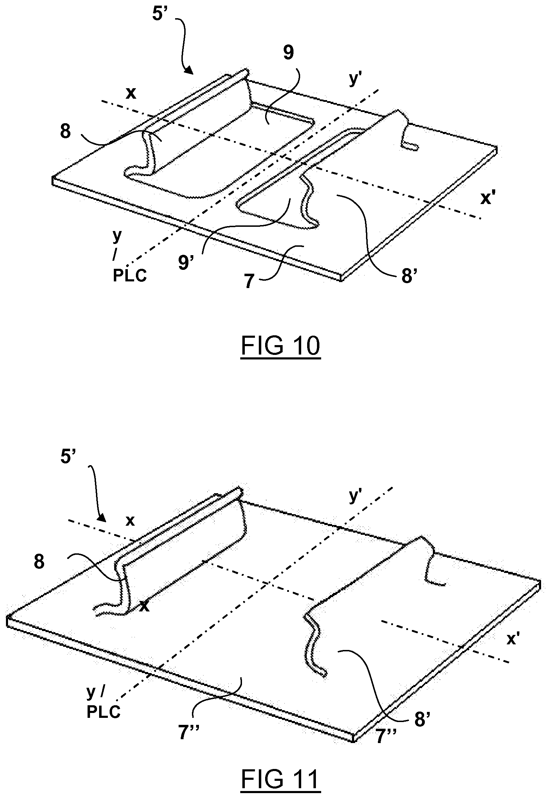

Dans les contre-exemples illustrés en figures 10 et 11, les ailes 8, 8' des élément de fixation 5' sont formées par découpe de la semelle 7, de la même manière que pour la variante des figures 1 à 5 pour la figure 10 et sont formées de la même manière que pour la variante de la figures 8 pour la figure 11, sauf que les ailes 8, 8' sont disposées en vis-à-vis l'une de l'autre, de chaque côté de l'axe longitudinal central yy' ; Ainsi, les deux ailes 8, 8' sont situées symétriquement par rapport à cet axe longitudinal central yy', c'est-à-dire que les deux ailes 8, 8' sont situées symétriquement par rapport au plan longitudinal central PLC.

Ces deux solutions ne donnent pas satisfaction car pour une série de vitrage, il se produit régulièrement, lors du clippage, un déchaussement de la semelle par un mouvement de rotation de la semelle autour d'un axe de rotation passant par son plan longitudinal de symétrie PLC et perpendiculaire à la semelle.

## Revendications

1. Vitrage (1) comprenant un élément vitré (2), au moins une portion de joint profilé (3), au moins une pièce rapportée (4) telle qu'un enjoliveur, et au moins un élément de fixation (5) pour la fixation de ladite pièce rapportée (4) à ladite portion de joint profilé (3), dont ledit élément de fixation (5) comporte une semelle (7, 7', 7") présentant un axe longitudinal, ladite semelle étant surmoulée au moins partiellement dans ladite portion de joint profilé (3) et supporte au moins trois ailes (8, 8', 8") qui sont situées en dehors de ladite portion de joint profilé (3), pour la fixation de ladite pièce rapportée (4) audit élément de fixation (5), lesdites ailes étant décalées longitudinalement **caractérisé en ce que** trois ailes (8, 8', 8") sont situées symétriquement par rapport à un plan de symétrie perpendiculaire à ladite semelle, avec l'aile centrale (8') qui présente une longueur égale à la somme de la longueur des deux autres ailes (8, 8")..

2. Vitrage (1) suivant la revendication 1, **caractérisé en ce qu'**au moins deux ailes (8, 8', 8") se terminent chacune par une extrémité distale (12, 12', 12") en forme en coupe de crochet, deux crochets au moins étant orientés dans deux directions opposées.

3. Vitrage (1) suivant la revendication 1 ou 2, **caractérisé en ce que** les deux ailes (8, 8") autre que l'aile centrale (8') présentent la même longueur.

4. Vitrage (1) suivant l'une quelconque des revendications 1 à 3, **caractérisé en ce que** la semelle (7', 7") est pleine dans sa partie de liaison avec au moins une aile (8, 8').

5. Vitrage (1) suivant l'une quelconque des revendications 1 à 4, **caractérisé en ce qu'**au moins une aile (8, 8'), et de préférence de chaque aile (8, 8'), est réalisée à partir d'une portion de ladite semelle (7, 7') qui est découpée et pliée.

6. Vitrage (1) suivant l'une quelconque des revendications 1 à 5, **caractérisé en ce que** ladite semelle (7) est de forme rectangulaire et comporte, de préférence, à chaque extrémité longitudinale au moins une encoche (6) ou un trou.

7. Vitrage (1) suivant l'une quelconque des revendications 1 à 6, **caractérisé en ce que** ladite semelle (7) est surmoulée suivant au moins deux bandes (7a) chacune d'une largeur a et qui s'étendent chacune suivant la longueur de la semelle.

8. Vitrage (1) suivant l'une quelconque des revendications 1 à 7, **caractérisé en ce que** au moins une aile (8, 8'), et de préférence de chaque aile (8, 8'), se trouve complètement à l'intérieur d'un espace délimité par la projection perpendiculaire du pourtour de la semelle.

9. Vitrage (1) suivant l'une quelconque des revendications 1 à 8, **caractérisé en ce que** ladite pièce rapportée (4) est appliquée au moins le long d'un bord longitudinal du vitrage, et de préférence le long de deux bords au moins du vitrage, contre ladite portion de cordon profilé (3).

10. Elément de fixation (5) pour un vitrage (1) suivant l'une quelconque des revendications 1 à 9, ledit élément de fixation (5) comportant une semelle (7) présentant un axe longitudinal, ladite semelle supportant trois ailes (8, 8', 8") décalées longitudinalement, pour la fixation de ladite pièce rapportée (4) audit élément de fixation (5), avec l'aile centrale (8') qui présente une longueur égale à la somme de la longueur des deux autres ailes (8, 8").

11. Procédé de fabrication d'un vitrage (1) suivant l'une quelconque des revendications 1 à 9, ledit vitrage comprenant un élément vitré (2), au moins une portion de joint profilé (3), au moins une pièce rapportée (4) telle qu'un enjoliveur, et au moins un élément de fixation (5) pour la fixation de ladite pièce rapportée (4) à ladite portion de joint profilé (3), **caractérisé en ce que** ledit élément de fixation (5) comporte une semelle (7, 7', 7") présentant un axe longitudinal, ladite semelle étant surmoulée au moins partiellement dans ladite portion de joint profilé (3) et supporte trois ailes (8, 8', 8") décalées longitudinalement et qui sont situées en dehors de ladite portion de joint profilé (3), pour la fixation de ladite pièce rapportée (4) audit élément de fixation (5).

## Patentansprüche

1. Glasscheibe (1), umfassend ein Glaselement (2), mindestens einen Dichtungsprofilabschnitt (3), mindestens einen Einsatz (4) wie ein Abdeckelement und mindestens ein Befestigungselement (5) zum Befestigen des Einsatzes (4) an dem Dichtungsprofilabschnitt (3), wobei das Befestigungselement (5) eine Sohle (7, 7', 7") mit einer Längsachse aufweist, wobei die Sohle zumindest teilweise in dem Dichtungsprofilabschnitt (3) umspritzt ist und mindestens drei Schenkel (8, 8', 8"), die außerhalb des Dichtungsprofilabschnitts (3) gelegen sind, zum Befestigen des Einsatzes (4) an dem Befestigungselement (5) trägt, wobei die Schenkel in Längsrichtung versetzt sind, **dadurch gekennzeichnet, dass** drei Schenkel (8, 8', 8") in Bezug auf eine Symmetrieebene symmetrisch senkrecht zu der Sohle angeordnet sind, wobei der mittlere Schenkel (8') eine Länge hat, die gleich der Summe der Länge der beiden anderen Schenkel (8, 8") ist.

2. Glasscheibe (1) nach Anspruch 1, **dadurch gekennzeichnet, dass** mindestens zwei Schenkel (8, 8', 8") jeweils mit einem distalen Ende (12, 12', 12") mit der Querschnittsform eines Hakens enden, wobei mindestens zwei Haken in zwei entgegengesetzte Richtungen gerichtet sind.

3. Glasscheibe (1) nach Anspruch 1 oder 2, **dadurch gekennzeichnet, dass** die beiden Schenkel (8, 8"), die nicht der mittlere Schenkel (8') sind, die gleiche Länge aufweisen.

4. Glasscheibe (1) nach einem der Ansprüche 1 bis 3, **dadurch gekennzeichnet, dass** die Sohle (7', 7") in ihrem Verbindungsabschnitt mit mindestens einem Schenkel (8, 8') massiv ist.

5. Glasscheibe (1) nach einem der Ansprüche 1 bis 4, **dadurch gekennzeichnet, dass** mindestens ein Schenkel (8, 8') und bevorzugt jeder Schenkel (8, 8') ausgehend von einem Abschnitt der Sohle (7, 7') ausgeführt ist, der geschnitten und gebogen wird.

6. Glasscheibe (1) nach einem der Ansprüche 1 bis 5, **dadurch gekennzeichnet, dass** die Sohle (7) rechteckig ist und bevorzugt an jedem Längsende mindestens eine Kerbe (6) oder ein Loch aufweist.

7. Glasscheibe (1) nach einem der Ansprüche 1 bis 6, **dadurch gekennzeichnet, dass** die Sohle (7) entlang von mindestens zwei Streifen (7a) mit jeweils einer Breite a, die sich jeweils entlang der Länge der Sohle erstrecken, umspritzt ist.

8. Glasscheibe (1) nach einem der Ansprüche 1 bis 7, **dadurch gekennzeichnet, dass** sich mindestens ein Schenkel (8, 8') und bevorzugt jeder Schenkel (8, 8') vollständig im Inneren eines Raums befindet, der durch die senkrechte Projektion des Umfangs der Sohle begrenzt wird.

9. Glasscheibe (1) nach einem der Ansprüche 1 bis 8, **dadurch gekennzeichnet, dass** der Einsatz (4) mindestens entlang eines Längsrandes der Glasscheibe und bevorzugt entlang von mindestens zwei Rändern der Glasscheibe gegen den Profilstrangabschnitt (3) angebracht ist.

10. Befestigungselement (5) für eine Glasscheibe (1) nach einem der Ansprüche 1 bis 9, wobei das Befestigungselement (5) eine Sohle (7) mit einer Längsachse aufweist, wobei die Sohle drei in Längsrichtung versetzte Schenkel (8, 8', 8") zum Befestigen des Einsatzes (4) an dem Befestigungselement (5) trägt, wobei der mittlere Schenkel (8') eine Länge aufweist, die gleich der Summe der Länge der beiden anderen Schenkel (8, 8") ist.

11. Verfahren zur Herstellung einer Glasscheibe (1) nach einem der Ansprüche 1 bis 9, wobei die Glasscheibe ein Glaselement (2), mindestens einen Dichtungsprofilabschnitt (3), mindestens einen Einsatz (4) wie ein Abdeckelement und mindestens ein Befestigungselement (5) zum Befestigen des Einsatzes (4) an dem Dichtungsprofilabschnitt (3) umfasst, **dadurch gekennzeichnet, dass** das Befestigungselement (5) eine Sohle (7, 7', 7") mit einer Längsachse aufweist, wobei die Sohle zumindest teilweise in dem Dichtungsprofilabschnitt (3) umspritzt ist und drei Schenkel (8, 8', 8"), die in Längsrichtung versetzt sind und außerhalb des Dichtungsprofilabschnitts (3) gelegen sind, zum Befestigen des Einsatzes (4) an dem Befestigungselement (5) trägt.

## Claims

1. A window (1) comprising a glazed element (2), at least one portion of a profiled seal (3), at least one insert (4) such as a trim, and at least one fastener (5) for fastening said insert (4) to said portion of the profiled seal (3), whose said fastener (5) includes a plate (7, 7', 7") having a longitudinal axis, said plate being at least partially overmolded in said portion of the profiled seal (3) and supports at least three flanges (8, 8', 8") that are located outside said portion of a profiled seal (3), for fastening said insert (4) to said fastener (5), said flanges being longitudinally offset, **characterized in that** three flanges (8, 8', 8") are located symmetrically with respect to a plane of symmetry perpendicular to said plate, with the central flange (8') having a length equal to the sum of the length of the two other flanges (8, 8").

2. The window (1) as claimed in claim 1, **characterized in that** at least two flanges (8, 8', 8") each terminate in a distal end (12, 12', 12") which is hook-shaped in cross section, at least two hooks being oriented in two opposite directions.

3. The window (1) as claimed in claim 1 or 2, **characterized in that** the two flanges (8, 8") other than the central flange (8') have the same length.

4. The window (1) as claimed in any one of claims 1 to 3, **characterized in that** the plate (7', 7") is unapertured in its part connecting with at least one flange (8, 8') .

5. The window (1) as claimed in any one of claims 1 to 4, **characterized in that** at least one flange (8, 8'), and preferably each flange (8, 8'), is made from a portion of said plate (7, 7') which is cut and bent up.

6. The window (1) as claimed in any one of claims 1 to 5, **characterized in that** said plate (7) has a rectangular shape and preferably includes, at each longitudinal end, at least one notch (6) or a hole.

7. The window (1) as claimed in any one of claims 1 to 6, **characterized in that** said plate (7) is overmolded along at least two strips (7a), each having a width a and each extending along the length of the plate.

8. The window (1) as claimed in any one of claims 1 to 7, **characterized in that** at least one flange (8, 8'), and preferably each flange (8, 8'), lies completely within a space bounded by the perpendicular projection of the perimeter of the plate.

9. The window (1) as claimed in any one of claims 1 to 8, **characterized in that** said insert (4) is applied at least along one longitudinal edge of the window, and preferably along at least two edges of the window, against said portion of the profiled sealing bead (3).

10. A fastener (5) for a window (1) as claimed in any one of claims 1 to 9, said fastener (5) including a plate (7) having a longitudinal axis, said plate supporting at least three longitudinally offset flanges (8, 8', 8") for fastening said insert (4) to said fastener (5), with the central flange (8') having a length equal to the sum of the length of the two other flanges (8, 8")..

11. A method of manufacturing a window (1) as claimed in any one of claims 1 to 9, said window comprising a glazed element (2), at least one portion of a profiled seal (3), at least one insert (4) such as a trim, and at least one fastener (5) for fastening said insert (4) to said portion of the profiled seal (3), **characterized in that** said fastener (5) includes a plate (7, 7', 7") having a longitudinal axis, said plate being at least partially overmolded in said portion of the profiled seal (3) and supports at least three flanges (8, 8', 8") that are longitudinally offset and located outside said portion of the profiled seal (3), for fastening said insert (4) to said fastener (5).
